# EUROPEAN PATENT APPLICATION

(11) **EP 1 004 791 A1**
(43) Date of publication of application: **31.05.2000**
(21) Application number: 99309364.0
(22) Date of filing: 24.11.1999
(51) Int. Cl.: F16F 9/14

(54) **Rotary damper**

(30) Priority: 25.11.1998 JP 33407698
(71) Applicant: TOK BEARING CO., LTD., Tokyo 174-8501 (JP)
(72) Inventor: Takahashi, Kenji, c/o Tok Bearing Co., Ltd., Tokyo 174-8501 (JP); Sasa, Hirozumi, c/o Tok Bearing Co., Ltd., Tokyo 174-8501 (JP)
(74) Representative: Leale, Robin George

(57) **Abstract**

A rotary damper has a housing (10) having a chamber (11) filled with a viscous fluid (19), and a rotatable member (16) relatively rotatably disposed in the housing and having a shaft (17) positioned in the chamber. The shaft has a first ridge (21) projecting radially outwardly closely to an inner circumferential surface of the chamber. A second ridge (15) projects radially inwardly from the inner circumferential surface of the chamber closely to an outer circumferential surface of the shaft. A movable valve (22) is mounted on the first ridge for controlling an amount of the viscous fluid flowing across the first ridge, and a seal member (12) is disposed around a portion of the rotatable member which has a diameter smaller than the outside diameter of the shaft within the housing.

## Description

The present invention relates to a rotary damper having a housing filled with a viscous fluid.

### Description of the Related Art:

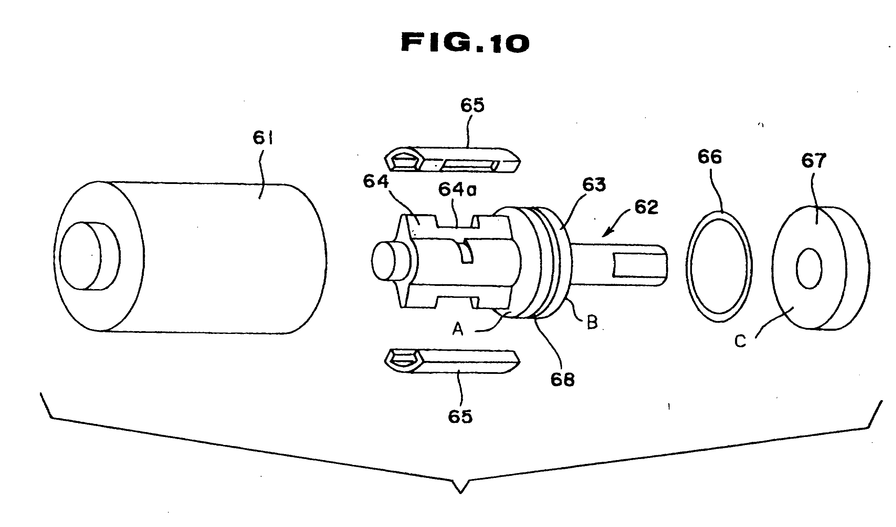

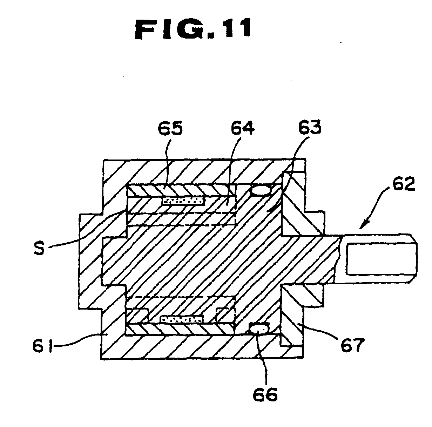

One known rotary damper, as disclosed in Japanese laid-open patent publication No. 4-282039, for example, has a rotatable member including a flange which serves as a partition wall defining a fluid chamber in a housing. Such a structure has posed various problems. This known rotary damper will be described with reference to FIGS. 10 and 11 of the accompanying drawings. A shown in FIGS. 10 and 11, the rotary damper has a housing 61 in which a shaft 62 is rotatably disposed as a rotatable member. The shaft 62 has a circular flange 63 near an open end of the housing 61, the flange 63 having such an outside diameter that its outer circumferential surface is held in sliding contact with the inner circumferential surface of the housing 61. The flange 63 defines a chamber filled with a viscous fluid in the housing 61. The shaft 62 has a pair of diametrically opposite vanes 64 disposed in the chamber. The vanes 64 have recesses 64a defined in respective radially outer ends thereof as fluid passages. Movable valves 65 are mounted respectively on the radially outer ends of the vanes 64 in sliding contact with the inner circumferential surface of the housing 61, for regulating the amount of the viscous fluid as it flows through the recesses 64a. When the shaft 62 rotates about its own axis in a first direction, the movable valves 65 close the fluid passages provided by the recesses 64a, generating a strong damping force which makes it necessary to apply a high torque to rotate the shaft 62. When the shaft 62 rotates about its own axis in a second direction opposite to the first direction, the movable valves 65 open the fluid passages, generating substantially no damping force. The viscous fluid is sealed in the chamber by an O-ring 66 mounted in a groove 68 defined in the outer circumferential surface of the flange 63 and an end cover 67 fitted in and fused to the open end of the housing 61, closing the open end of the housing 61.

The O-ring 66 rotates with the shaft 62 while frictionally engaging the inner circumferential surface of the housing 61. Since the O-ring 66 is mounted on the outer circumferential surface of the flange 63 which is of a diameter greater than the diametrical dimension of the vanes 64, the O-ring 66 has a large area of friction with the inner circumferential surface of the housing 61. When the shaft 62 rotates in the first direction, since a large torque is required to rotate the shaft 62 due to the generated damping force, the friction between the O-ring 66 and the inner circumferential surface of the housing 61 does not cause a significant problem. However, when the shaft 62 rotates in the second direction, substantially no damping force is produced, and hence a very small torque should be required to rotate the shaft 62. Actually, a substantial torque is exerted on the shaft 62 because of the large friction caused between the O-ring 66 and the inner circumferential surface of the housing 61.

Furthermore, when the rotary damper produces a large damping force which requires a high torque to rotate the shaft 62, a thrust force is applied to a surface A of the flange 63 in proportion to the area of the surface A which bears the pressure of the viscous fluid, causing friction between an opposite surface B of the flange 63 and a surface C of the end cover 67 which is held in sliding contact with the surface B of the flange 63. The friction thus caused tends to make irregular the torque produced when the shaft 62 is rotated. The friction is also liable to cause the surface B of the flange 63 and the surface C of the end cover 67 to wear quickly, increasing a gap s (see FIG. 11) between axial ends of the vanes 64 and a confronting closed inner surface of the housing 61. The gap s allows the viscous fluid to flow therethrough from a higher-pressure compartment to a lower-pressure compartment across the vanes 64, thereby impairing the damping function of the rotary damper.

According to the present invention there is provided a rotary damper comprising a housing having a chamber filled with a viscous fluid, a rotatable member relatively rotatably disposed in said housing and having a shaft positioned in said chamber, said shaft having a first ridge projecting radially outwardly closely to an inner circumferential surface of said chamber, a second ridge projecting radially inwardly from said inner circumferential surface of said chamber closely to an outer circumferential surface of said shaft, a movable valve mounted on said first or second ridge for controlling an amount of said viscous fluid flowing across said first or second ridge, and a seal member disposed around said rotatable member, said rotatable member being devoid of a portion having a diameter greater than an outside diameter of said shaft within said housing.

Since the seal member is disposed around a portion of the rotatable member which has a diameter equal to or smaller than the outside diameter of the shaft, the area of contact between the seal member and a nonrotatable member is reduced, so as similarly to reduce an increase in a torque produced by the friction of the seal member when the rotatable member rotates in the direction in which the rotary damper produces essentially no damping action. The rotatable member has no large-diameter flange, and no thrust force is applied to the rotatable member when the rotary damper produces a large damping force requiring a high torque to rotate the rotatable member. Therefore, no friction occurs between the rotatable member and an end cover of the housing, so that a stable torque can be maintained for rotating the rotatable member and the rotary damper can be highly durable when the rotary damper provides a damping action.

Some embodiments of the invention will now be described by way of example and with reference to the accompanying drawings, in which:
FIG. 1 is an exploded perspective view of a rotary damper according to a first embodiment of the present invention;
FIG. 2 is an axial cross-sectional view of the rotary damper according to the first embodiment;
FIG. 3 is a cross-sectional view taken along line III - III of FIG. 2;
FIG. 4 is an exploded perspective view of a rotary damper according to a second embodiment of the present invention;
FIG. 5 is an axial cross-sectional view of the rotary damper according to the second embodiment;
FIGS. 6A and 6B are views showing movable valves according to a first modification;
FIGS. 7A and 7B are views showing movable valves according to a second modification;
FIGS. 8A and 8B are views showing movable valves according to a third modification;
FIG. 9 is a partially enlarged view of the rotary damper according to a modification where movable valves are mounted on the ridges projecting from the inner circumferential surfaces of the housing;
FIG. 10 is an exploded perspective view of a conventional rotary damper; and
FIG. 11 is an axial cross-sectional view of the conventional rotary damper.

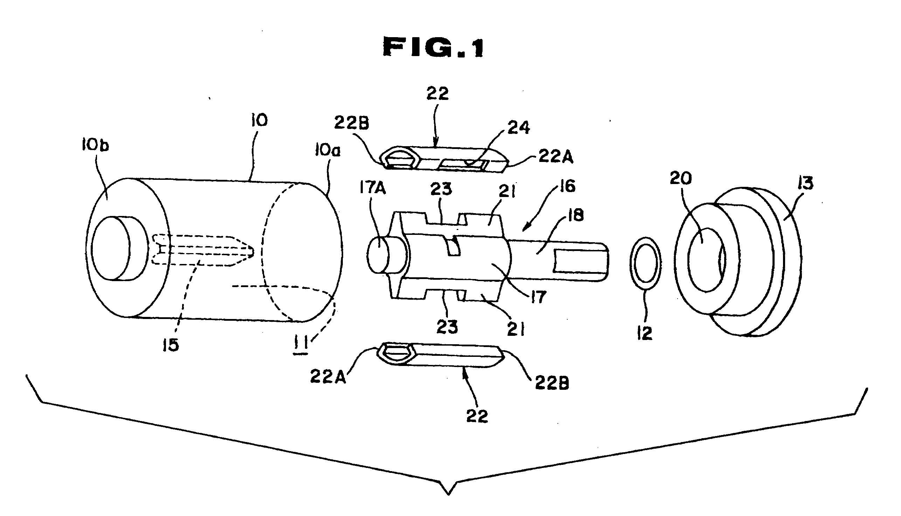

As shown in FIGS. 1 through 3, a rotary damper according to a first embodiment of the present invention has a housing 10 made of synthetic resin such as polyoxymethylene or the like or metal and having a chamber 11. The housing 10 has an open end 10a closed by an end cover 13 fitted therein. The housing 10 also has a closed end 10b serving as a bottom of the chamber 11 and having a bearing recess 14 defined centrally therein. The housing 11 also has a pair of diametrically opposite ridges 15 extending axially along an inner circumferential surface thereof and projecting radially inwardly. The ridges 15 serve to divide the chamber 11 into two compartments.

The rotary damper has a rotatable member 16 made of synthetic resin such as polyoxymethylene or the like or metal and rotatably disposed in the housing 10. The rotatable member 16 comprises a shaft 17 positioned in the chamber 11 and an extension 18 extending axially from the shaft 17 and projecting through the end cover 13 out of the housing 10. The chamber 11 is filled with a viscous fluid 19. The shaft 17 has a distal end 17A rotatably supported in the bearing recess 14. The extension 18 is rotatably supported in a central bearing opening 20 defined in the end cover 13. A seal member 12 such as an O-ring mounted on the extension 18 is disposed between the extension 18 and a wall surface defining the central bearing opening 20 for thereby sealing the clearance therebetween for preventing the viscous fluid from leaking out of the chamber 11.

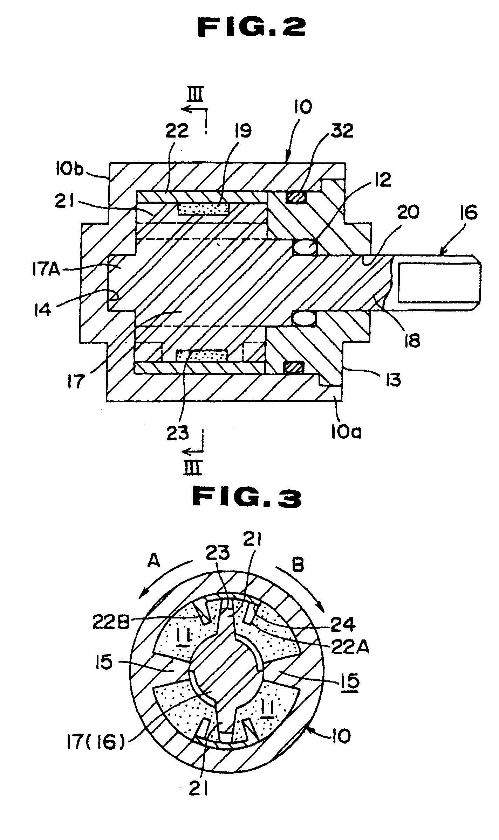

As shown in FIG. 2, another seal member 32 may be interposed between an outer circumferential surface of the end cover 13 and an inner circumferential surface of the housing 10 which defines the open end 10a.

The end 10b may have a boss projecting inwardly into the chamber 11 rather than the recess 14, and the distal end 17A of the shaft 17 may have a recess in which the boss of the end 10b may be rotatably supported.

As shown in FIG. 1, the shaft 17 has a pair of diametrically opposite ridges 21 extending axially therealong and projecting radially outwardly away from each other. The ridges 21 serve as vanes dividing the compartments in the chamber 11 into spaces whose volumes are variable complementarily to each other in response to relative rotation of the shaft 17 and the housing 10. Movable valves 22 are removably mounted on the respective ridges 21. The movable valves 22 cooperate with the ridges 21 in controlling the amount of the viscous fluid 19 as it flows between the two spaces divided from each of the compartments by the ridges 21. Each of the movable valves 22, which is of a substantially C-shaped cross section, is disposed astride of one of the ridges 21. Each of the ridges 21 has a recess 23 defined therein which serves as part of a fluid passage, and each of the movable valves 22 has two hanging walls 22A, 22B disposed one on each side of one of the ridges 21, i.e., on its opposite ends in the circumferential direction. The hanging wall 22A has a recess 24 defined therein which serves as part of the fluid passage. The hanging walls 22A, 22B of each of the movable valves 22 are spaced from each other in the circumferential direction of the housing 10 by a distance which is greater than the width of ridge 21 in the circumferential direction of the housing 10, so that play is provided between the hanging walls 22A, 22B and the ridge 21 in the circumferential direction of the housing 10. The movable valves 22 mounted on the respective ridges 21 have radially outer surfaces held in sliding contact with the inner circumferential surface of the housing 10. The movable valves 22 and the ridges 21 have axial ends held in sliding contact with an inner wall surface of the end cover 13, and opposite axial ends held in sliding contact with an inner wall surface of the closed end 10b of the housing 10. The extension 18 of the rotatable member 16, which has a diameter smaller than the outside diameter of the shaft 17, is rotatably supported in the bearing opening 20 in the end cover 13.

In this embodiment, the ridges 15 are provided as one pair, and the ridges 21 are also provided as one pair. However, the rotary damper may have a single ridge 15 and a single ridge 21 or three or more ridges 15 and three or more ridges 21 depending on the angle through the rotary damper is required to be angularly displaced.

Operation of the rotary damper according to the first embodiment will be described below. When the shaft 17 rotates in a first direction indicated by the arrow A in FIG. 3, the movable valves 22 move on the ridges 21 within the play until the hanging walls 22B of the movable valves 22 are pressed against respective first side faces of the ridges 21. At this time, the recesses 23 in the ridges 21 are substantially fully closed by the hanging walls 22B of the movable valves 22, developing a high pressure buildup in the spaces ahead of the ridges 21 as they turn. Therefore, a large torque corresponding to the developed high pressure buildup is applied to the rotatable member 16. When the shaft 17 rotates back in a second direction indicated by the arrow B in FIG. 3, the movable valves 22 move back on the ridges 21 until the hanging walls 22A of the movable valves 22 are pressed against respective second side faces of the ridges 21. The recesses 23 in the ridges 21 communicate with the recesses 24 in the hanging walls 22A, allowing the viscous fluid to flow smoothly between the spaces divided by the ridges 21. Therefore, there is developed substantially no pressure buildup in the chamber 11. The rotatable member 16 can thus be rotated substantially free of resistance with a relatively small torque.

The seal member 12 mounted on the rotatable member 16 to seal the viscous fluid in the chamber 11 is disposed on the extension 18 which is smaller in diameter than the shaft 17. Therefore, the area of the seal member 12 which contacts an inner circumferential surface of the end cover 13 is relatively small, and the effect that the friction caused between the seal member 12 and the end cover 13 has on the torque needed to rotate the rotatable member 16 is held to a minimum. Since the rotatable member 16 has no large-diameter flange defining an axial end of the chamber 11, even when a high pressure is produced in the chamber 11 for exerting a large damping action, no thrust force is applied to the rotatable member 16, and no friction is caused between the rotatable member 16 and the end cover 13.

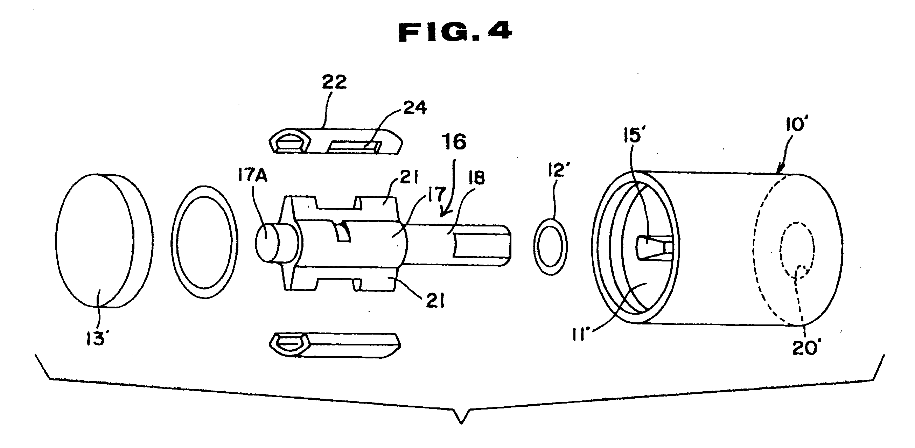

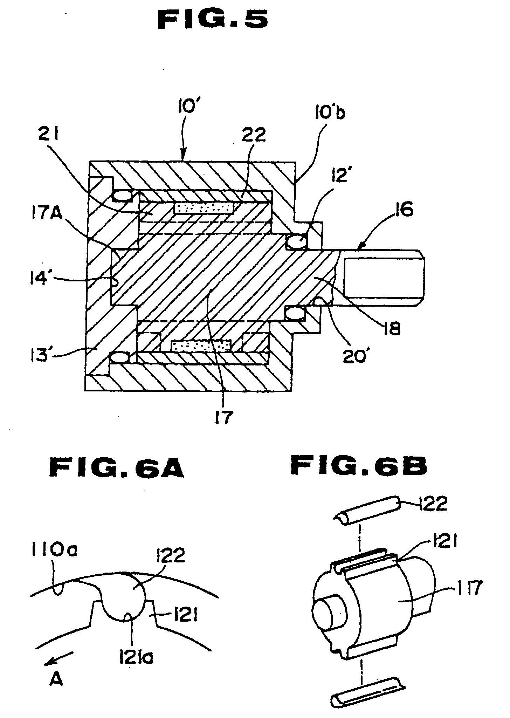

A rotary damper according to a second embodiment of the present invention will be described below with reference to FIGS. 4 and 5. Those parts of the rotary damper shown in FIGS. 4 and 5 which are identical to those of the rotary damper shown in FIGS. 1 and 2 are denoted by identical reference characters, and will not be described in detail below.

In the second embodiment, the extension 18 of the rotatable member 16 is rotatably supported in a bearing opening 20' defined in a closed end 10'b of a housing 10' opposite to an end cover 13'. The extension 18, which is smaller in diameter than the shaft 17 of the rotatable member 16, is sealed by an O-ring 12' as a seal member. The end cover 13' has a bearing recess 14' defined centrally in an inner wall surface thereof, and the distal end 17A of the shaft 17 is rotatably supported in the bearing recess 14'. The rotary damper according to the second embodiment, which is constructed as described above, operates in the same manner and offers the same advantages as the rotary damper according to the first embodiment.

Various modifications of the movable valves will be described below with reference to FIGS. 6A and 6B, 7A and 7B, and 8A and 8B.

According to the first modification shown in FIGS. 6A and 6B, a ridge 121 projecting from a shaft 117 has a groove 121a of an arcuate cross section defined in a radially outer end thereof. A movable valve 122 has an engaging body having a semicircular cross section complementary in shape to the arcuate cross section of the groove 121a, and a tapered free end extending from the engaging body. The engaging body of the movable valve 122 is fitted in the groove 121a. The tapered free end has an outer curved surface of large curvature complementary in shape to an inner circumferential surface 110a of the housing. The movable valve 122 is of a substantially drop-shaped cross section.

When the shaft 117 rotates in the direction indicated by the arrow A, the movable valve 122 closes a fluid passage between the outer curved surface of the tapered free end and the inner circumferential surface 110a of the housing. When the shaft 117 rotates in the direction opposite to the direction indicated by the arrow A, the movable valve 122 opens the fluid passage.

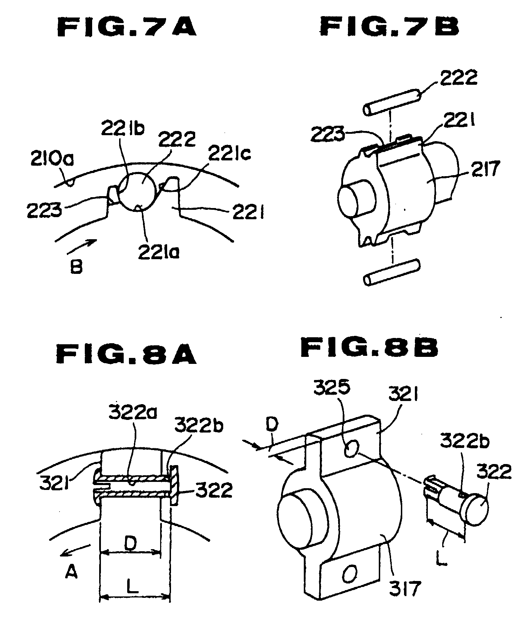

According to the second modification shown in FIGS. 7A and 7B, a movable valve 222 is in the form of an axial solid cylinder having a circular cross section. A ridge 221 has a groove 221a defined in a radially outer end thereof by an axial arcuate surface 221b complementary in shape to an outer surface of the movable valve 222 and an opposite axial curved surface 221c having greater curvature than the arcuate surface 221b. The ridge 221 has a recess 223 defined in a wall thereof which has the arcuate surface 221b.

When a shaft 217 rotates in the direction indicated by the arrow B, the movable valve 222 is positioned on the arcuate surface 221b in the groove 221a, opening a fluid passage between a radially outer surface of the movable valve 222 and an inner circumferential surface 210a of the housing. When the shaft 217 rotates in the direction opposite to the direction indicated by the arrow B, the movable valve 222 moves on the curved surface 221c into contact with the inner circumferential surface 210a of the housing under the pressure of the fluid flowing from the recess 223, closing the fluid passage.

According to the third modification shown in FIGS. 8A and 8B, a movable valve 322 is in the form of a hollow cylinder axially movably inserted in a through hole 325 defined in a ridge 321 and extending between opposite sides thereof. The movable valve 322 has a main body extending between a large-diameter head on one closed end and a flange on the other open end, the main body having a length L greater than the thickness D of the ridge 321. The main body includes a portion which, when axially pushed from one side of the ridge 321, projects from the other side of the ridge 321. That closed end of the main body has a diametrical orifice 322b defined therein near the large-diameter head. A bore 322a axially extending in the movable body 322 communicates with the diametrical orifice 322b.

When a shaft 317 rotates in the direction indicated by the arrow A, the movable valve 322 moves in the through hole 325 to the right in FIG. 8A, opening a fluid passage from one side of the ridge 321 through the bore 322a and the orifice 322b to the other side of the ridge 321. When the shaft 317 rotates in the direction opposite to the direction indicated by the arrow A, the movable valve 322 moves in the through hole 325 to the left in FIG. 8A, closing the fluid passage.

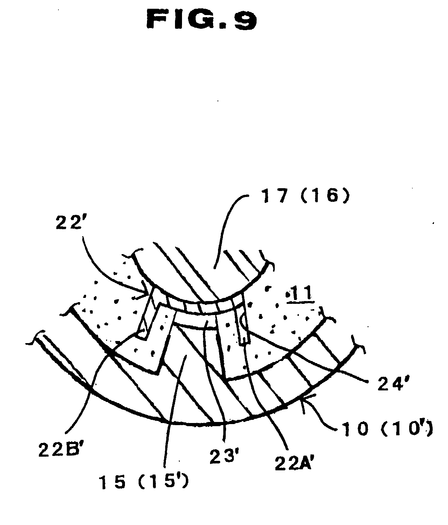

In the above embodiments and modifications, the movable valves 22, 122, 222, 322 are mounted on the respective ridges 21, 121, 221, 321. As shown FIG. 9, however, movable valves 22' may be mounted on the ridges 15(15') projecting from the inner circumferential surfaces of the housing 10(10'). Each of the movable valves 22' has two hanging walls 22A' and 22B' disposed one on each side of one of the ridges 15(15'). The hanging wall 22A' has a recess defined therein which serves as part of fluid passage. Each of the ridges 15(15') has a recess 23' defined therein which serves as part of fluid passage. The recesses 23' in the ridge 15(15') communicate with the recesses 24' in the hanging walls 22A'.

It will thus be seen that the present invention, at least in its preferred forms, provides a rotary damper which is effective to minimize a torque produced by the friction between an O-ring and a non-rotatable member for thereby making the rotary damper more suitable for its application, and also to prevent a thrust force from being applied to a rotatable member thereby to eliminate the friction between the rotatable member and an end cover of a housing.

## Claims

1. A rotary damper comprising:
a housing (10) having a chamber (11) filled with a viscous fluid (19);
a rotatable member (16) relatively rotatably disposed in said housing and having a shaft (17) positioned in said chamber, said shaft having a first ridge (21) projecting radially outwardly closely to an inner circumferential surface of said chamber;
a second ridge (15) projecting radially inwardly from said inner circumferential surface of said chamber closely to an outer circumferential surface of said shaft;
a movable valve (22) mounted on said first ridge for controlling an amount of said viscous fluid flowing across said first ridge; and
a seal member (12) disposed around said rotatable member;
said rotatable member being devoid of a portion having a diameter greater than an outside diameter of said shaft within said housing.

2. A rotary damper according to claim 1, wherein said movable valve (22) has a pair of hanging walls (22A,22B) on respective circumferentially opposite ends thereof, one on each side of said first ridge (21), said first ridge having a recess (23) and one of said hanging walls having a recess (24), the arrangement of said movable valve being such that the recesses communicate with each other to define a fluid passage when said rotatable member (16) rotates in one direction.

3. A rotary damper according to claim 1, wherein said first ridge (121) has an axial groove (121a) of an arcuate cross section defined in a distal end thereof, said movable valve (122) having a proximal end engaging in said groove and a free end extending from said proximal end, the arrangement of said movable valve being such that when said rotatable member (117) rotates in one direction, said free end disengages from said inner circumferential surface (110a) of said chamber to define a fluid passage between said free end and said inner circumferential surface of said chamber.

4. A rotary damper according to claim 1, wherein said first ridge (221) comprises two axial end surfaces (221b,221c), one of said surfaces having a recess (223) defined therein, said movable valve comprising an axial cylinder (222) movable in a groove (221a) defined between said two axial end surfaces, the arrangement of said movable valve being such that when said rotatable member (217) rotates in one direction, said movable valve opens said recess to define a fluid passage therethrough.

5. A rotary damper according to claim 1, wherein said first ridge (321) has a through hole (325) defined therein and extending between opposite sides thereof, said movable valve (322) being axially movably disposed in said through hole, said movable valve having a bore (322a) defined therein and an orifice (322b) for communicating between said bore and an exterior space, the arrangement of said movable valve being such that when said rotatable member (317) rotates in one direction, said movable valve moves axially in said through hole to communicate between said bore and the exterior space through said orifice for defining a fluid passage therethrough.

6. A rotary damper according to any of claims 1 to 5, wherein said shaft (17) has a plurality of said first ridges (21), further comprising a plurality of said second ridges (15), each of said first ridges being positioned between adjacent two of said second ridges, and a plurality of said movable valves (22) mounted on said first ridges, respectively.

7. A rotary damper comprising:
a housing (10) having a chamber (11) filled with a viscous fluid (19);
a rotatable member (16) relatively rotatably disposed in said housing and having a shaft (17) positioned in said chamber, said shaft having a first ridge (21) projecting radially outwardly closely to an inner circumferential surface of said chamber;
a second ridge (15) projecting radially inwardly from said inner circumferential surface of said chamber closely to an outer circumferential surface of said shaft;
a movable valve (22) mounted on said second ridge for controlling an amount of said viscous fluid flowing across said second ridge; and
a seal member (12) disposed around said rotatable member;
said rotatable member being devoid of a portion having a diameter greater than an outside diameter of said shaft within said housing.

8. A rotary damper according to claim 7, wherein said shaft (17) has a plurality of said first ridges (21), further comprising a plurality of said second ridges (15), each of said first ridges being positioned between adjacent two of said second ridges, and a plurality of said movable valves (22) mounted on said second ridges, respectively.
